# EUROPÄISCHE PATENTSCHRIFT

(11) **EP 2 344 322 B1**
(45) Veröffentlichungstag und Bekanntmachung des Hinweises auf die Patenterteilung: **05.09.2012**
(21) Anmeldenummer: 09759644.9
(22) Anmeldetag: 19.10.2009
(51) Int. Cl.: B29C 65/60, B21J 15/04, B21J 15/38

(54) **Werkzeug zur Montage von Kunststoffnieten**
Tool for mounting plastic rivets
Outil de montage de rivets en matière plastique

(30) Priorität: 30.10.2008 DE 102008053984
(43) Veröffentlichungstag der Anmeldung: 20.07.2011
(73) Patentinhaber: Schaeffler Technologies AG & Co. KG, 91074 Herzogenaurach (DE)
(72) Erfinder: PFLÜGER, Hans-Peter, 76532 Baden-Baden (DE)
(86) Internationale Anmeldenummer: PCT/DE2009/001464
(87) Internationale Veröffentlichungsnummer: WO 2010/048925

(56) Entgegenhaltungen:
- EP-A1- 0 447 901
- US-A- 3 724 738
- US-A- 4 057 886
- US-A- 4 709 841

## Beschreibung

Die Erfindung betrifft ein Werkzeug zur manuellen Montage von Kunststoffnieten.

Kunststoffnieten mit einem Kopfteil mit einer Öffnung, in der ein Sperrstift axial verlagerbar aufgenommen ist, und einem Fußteil mit Spreizflügeln sind seit langem bekannt. Sie dienen der Verbindung von flachen Bauteilen, beispielsweise Platten aus Holz oder Kunststoff, Blechen und/oder Schienen und werden im Karosseriebau, in der Elektroinstallation, beispielsweise in Schaltschränken, eingesetzt. Hierzu werden in den Bauteilen fluchtende Öffnungen vorgesehen, durch die das Fußteil mit den Spreizflügeln durchgeführt wird. Ein Verpressen des Kopfteils mit dem diesem zugewandten Bauteil führt zu einer engen Beabstandung der zu verbindenden Bauteile. Gleichzeitig wird der Spreizstift in Richtung der Bauteile gedrückt, so dass die Spreizflügel einen Hinterschnitt mit dem diesem zugewandten Bauteil bilden und die Bauteile miteinander verbunden werden.

In der industriellen Montage werden hierzu automatisierte Werkzeuge eingesetzt. Bei einer manuellen Montage, beispielsweise in Werkstätten oder im Schaltschrankbau_{,} werden die Kunststoffnieten teilweise von Hand unter Verwendung von entsprechenden Spezialwerkzeugen (vgl. z.B. EP0447901) oder von üblichen Werkzeugen wie Zange, Hammer und einem Durchschlag zur Positionierung des Spreizstifts montiert. Die Verwendung mehrerer Werkzeuge bedeutet insbesondere unter räumlich beengten Verhältnissen und erschwerten Montagebedingungen, beispielsweise bei Über-Kopf-Einbau, einen erheblichen Aufwand und bedingt eine unfachmännische Montage derartiger Kunststoffnieten.

Aufgabe der Erfindung ist daher, ein alternatives Werkzeug zur manuellen Montage von Kunststoffnieten der beschriebenen Gattung vorzuschlagen.

Die Aufgabe wird durch ein Werkzeug gemäß Anspruch 1 gelöst.

Durch ein derartiges Werkzeug wird ein gattungsgemäßer Kunststoffniet verliersicher am Werkzeug aufgenommen, so dass dieser in die Montageöffnungen der Bauteile eingebracht werden kann, gegen das vordere zu verbindende Bauteil gepresst werden kann und anschließend nach Aufhebung der Verriegelung der Nadel der Spreizstift in Montageposition gesetzt werden kann, indem die Nadel axial verlagert wird. In vorteilhafter Weise ist dabei der Spreizstift in einer Fortsetzung zu einer axialen Führung der Nadel aufgenommen, wobei um die Öffnung eine Anlagefläche für das Kopfteil vorgesehen ist. Das Gehäuse ist dabei bezüglich seiner Gestalt ähnlich einem Schraubendreher ausgeführt und beispielsweise in Richtung der Öffnung auf einen Durchmesser begrenzt, der im Wesentlichen dem Durchmesser des Kopfteils entspricht, so dass das Werkzeug in räumlich beengte Montagesituationen eingesetzt werden kann.

In einem schaftartig ausgebildeten Gehäuseteil kann die Nadel von einem der Anlagefläche gegenüberliegenden Druckstück axial beaufschlagt werden. Das Druckstück kann dabei von dem axial wirksamen Energiespeicher, der sich an einem Gehäuse abstützt, gegenüber einem axialen Anschlag gedrückt werden, wobei die Nadel fest mit dem Druckstück verbunden, beispielsweise mit diesem verschraubt sein kann.

Die Verriegelung der Nadel oder des Druckstücks erfolgt in vorteilhafter Weise durch Ausbildung einer Verriegelungseinrichtung mit dem Gehäuse, indem das Druckstück gegenüber der Längsachse der Nadel verdreht wird und dabei mit dem Gehäuse in axiale Richtung einen Formschluss bildet. Durch die Verriegelung von Druckstück und Gehäuse und damit Nadel und Gehäuse ermöglicht ein Manipulieren und Setzen des Kunststoffniets ohne die Gefahr einer unerwünschten Betätigung der Nadel und einem dadurch bedingten Verlust des Kunststoffniets. Ist der Kunststoffniet in die Montageöffnung der Bauteile gesetzt, wird die Verriegelung gelöst und der Spreizstift mittels der Nadel axial verlagert. Das mit der Nadel verbundene Druckstück kann dabei erfindungsgemäß zur Auflösung des axialen Formschlusses um die Längsachse der Nadel verdreht und anschließend axial betätigt werden, so dass eine Einhandbedienung des Werkzeugs möglich ist. Es hat sich als vorteilhaft erwiesen, wenn das Druckstück an der Stirnseite des Werkzeugs angeordnet ist.

Der axiale Formschluss kann durch zueinander komplementären Querschnittsflächen zwischen Gehäuse und Druckstück bewirkt werden. Hierzu kann das Gehäuse eine als axiale Anschlagfläche für das Druckstück dienende Querschnittsfläche aufweisen, an dem das Druckstück bei axialer Beaufschlagung anschlägt, so dass eine Betätigung der Nadel verhindert wird. Die Querschnittsfläche weist dabei radiale Ausschnitte auf, die sich axial über einen Bereich erstrecken, zumindest dem Hub der Nadel entsprechen und in die bei entsprechender Verdrehung des Druckstücks radial erhabene Anformungen des Druckstücks eintauchen können. Die komplementären Querschnittsflächen können dabei mit Phasen versehen sein, so dass je nach Ausführung ein weicher oder harter Übergang die Aufhebung des axialen Formschlusses bei entsprechender Verdrehung des Druckstücks eingestellt werden kann. Durch die Gestalt der Querschnittsflächen, beispielsweise prismatisch oder sechseckig, kann die Anzahl der möglichen Freischaltungen der Verriegelung vorgegeben werden. Die einzelnen Verriegelungs- beziehungsweise Freigabepositionen können außen angezeigt werden. Alternativ oder zusätzlich können entsprechende Rastpositionen der Verriegelungs- beziehungsweise Freigabepositionen vorgesehen sein. Die Verdrehung kann in beide Richtungen wählbar sein, wobei entsprechende Anschläge der Verdrehpositionen vorgesehen sein können, oder kontinuierlich in eine Richtung, beispielsweise über einen Ratschenfreilauf vorgegeben werden.

Nach einem weiteren erfinderischen Gedanken ist vorgesehen, das Werkzeug für unterschiedliche Größen von Kunststoffnieten universell einsetzen zu können. Hierzu ist vorgesehen, die Kunststoffnieten mittels des Spreizstifts verliersicher aufzunehmen. Gemäß einer vorteilhaften Ausführung ist dabei vorgesehen, den Spreizstift mittels einer Anlagefläche, die durch einen radial wirksamen Energiespeicher gegen den Spreizstift vorgespannt ist, gegen Verlust zu sichern. Der Spreizstift wird dabei zwischen einer Führung der Nadel und der Anlagefläche verspannt. Der Durchmesser der Öffnung ist dabei so bemessen, dass die Spreizstifte der gängigen Kunststoffniete eingeführt werden können. Weiterhin ist der maximale Hub der Nadel an die maximale Größe der verwendbaren Kunststoffniete angepasst. Die Anlagefläche kann durch einen balligen Körper oder eine Scheibenfeder gebildet sein, die von radial außen durch eine Öffnung in die Führung der Nadel radial verlagerbar eingebracht wird und durch den radial wirksamen Energiespeicher beaufschlagt wird. Der Energiespeicher kann durch einen Federring gebildet sein, der beispielsweise geschlitzt ist und verdrehgesichert außen an der Führung angeordnet ist.

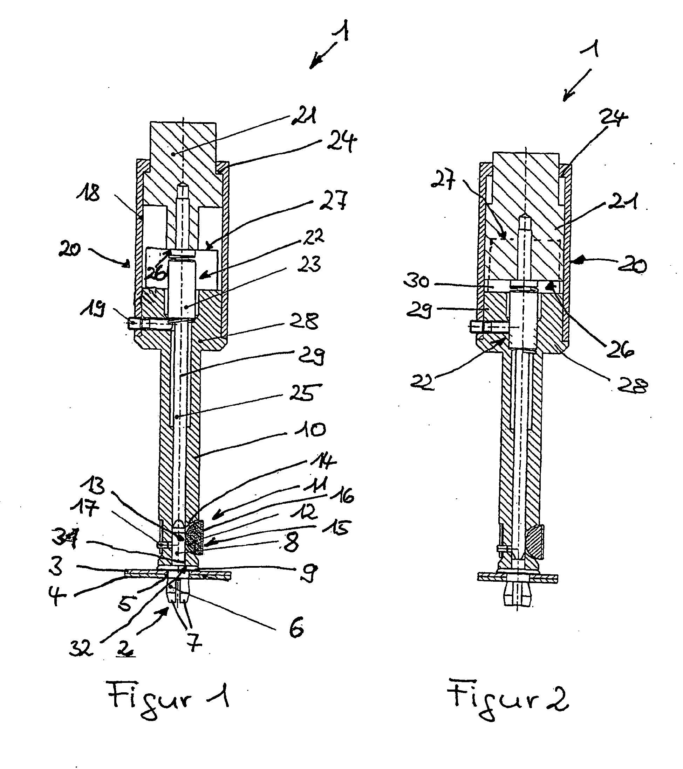

Die Erfindung wird anhand des in den Figuren 1 und 2 dargestellten Ausführungsbeispiels näher erläutert. Dabei zeigen:
- Figur 1: ein Werkzeug vor dem Setzen des Spreizstifts im Schnitt und
- Figur 2: das Werkzeug der Figur 1 nach dem Setzen des Spreizstifts im Schnitt.

Figur 1 zeigt das Werkzeug 1 zur manuellen Montage des Kunststoffniets 2 zur Befestigung der Bauteile 3, 4 aufeinander. Hierzu sind in den Bauteilen 3, 4 fluchtende Öffnungen 5, durch die das Fußteil 6 des Kunststoffniets 2 mit den Spreizflügeln 7 durchgesteckt und anschließend der Spreizstift 8 in den Kunststoffniet 2 gesenkt wird, so dass die Spreizflügel 7 nach außen gedrängt werden und einen Hinterschnitt zum Bauteil 4 bilden. Am Bauteil 3 stützt sich der Kunststoffniet 2 mittels des Kopfteils 9 ab, so dass die Bauteile 3, 4 gegeneinander verspannt und aufeinander fixiert werden.

Zur einfacheren manuellen Montage des Kunststoffniets 2 wird dieser zuerst verliersicher vom Werkzeug 1 aufgenommen. Hierzu ist an der schmalen Führung 10 des Gehäuseteils 28 eine Öffnung 31 vorgesehen, die den Spreizstift 8 verliersicher aufnimmt. Dabei verspannt die Verspannvorrichtung 11 den Spreizstift 8 gegen die Innenfläche der Führung 10, so dass Spreizstifte 8 mit unterschiedlichem Durchmesser aufgenommen werden können. Die Verspannvorrichtung 11 ist in dem gezeigten Ausführungsbeispiel durch eine Scheibenfeder 12 gebildet, die sich unter Ausbildung einer Anlagefläche 13 durch eine Öffnung 14 in der Führung 10 erstreckt und einen Anlagekontakt zum Spreizstift 8 bildet. Die Scheibenfeder 12 wird von einem radial wirksamen Energiespeicher 15 beaufschlagt, der in dem gezeigten Ausführungsbeispiel von einem geschlitzten Federring 16 gebildet ist, der mittels des Bolzens 17 verdrehgesichert ist. Das Kopfteil 9 kann nach dem Verpressen mit dem Bauteil 3 an der Aufnahmefläche 32 abgestützt werden.

Das Gehäuseteil 28 mit der Führung 10 und die Hülse 18 sind miteinander mittels des Stifts 19 aufeinander fixiert und bilden ein beispielsweise an die Form eines Schraubendrehers angelehntes Gehäuse 20. In dem Gehäuse 20 ist ein axial begrenzt verlagerbares Druckstück 21 aufgenommen, das mittels eines axial wirksamen Energiespeichers 22, der aus einer Druckfeder 23 gebildet sein kann und sich gegenüber dem Gehäuse 20 abstützt, gegen den Anschlag 24 vorgespannt wird.

Mit dem Druckstück 21 ist die Nadel 25 fest verbunden, beispielsweise eingeschraubt oder in ein Druckstück 21 aus Kunststoff eingegossen. Die Nadel 25 ist in der Führung 10 geführt und beaufschlagt bei Betätigung des Druckstücks 21 den Spreizstift 8. Um während des Positionier- beziehungsweise Andrückvorgangs des Kopfteils 9 eine unvorhergesehene Betätigung des Druckstücks 21 zu verhindern, ist während dieser Phase eine Verriegelung des Druckstücks vorgesehen. Hierzu weist das gezeigte Ausführungsbeispiel zueinander komplementäre Querschnittsflächen 26, 27 des Druckstücks 21 und des Gehäuseteils 28 auf. Diese verhindern bei einer nicht komplementären Anordnung um die Längsachse 29 die Betätigung des Druckstücks 21 und bewirken damit einen axialen Formschluss. Werden die komplementären Querschnittsflächen 26, 27 durch Verdrehen des Druckstücks 21 auf Deckung gebracht, kann diese axial entgegen der Wirkung des Energiespeichers 22 gedrückt und damit der Spreizstift 8 mittels der Nadel eingesenkt werden.

Figur 2 zeigt das Werkzeug 1 mit betätigtem Druckstück 21. Der beispielsweise prismatische Querschnitt 26 ist dabei durch Verdrehen in die prismatische Freimachung 30 des Gehäuseteils 28 eingesenkt, wodurch sich die Querschnittsflächen 26, 27 axial überschneiden können. Nach Auflösung des Drucks auf das Druckstück 21 kehrt das Druckstück 21 durch die Wirkung des Energiespeichers 22 an den Anschlag 24 zurück. Durch entsprechende - nicht dargestellte - Führungen nach dem Kugelschreiberprinzip zwischen dem Gehäuse 20 und dem Druckstück 21 kann eine selbstständige Rückkehr in den verriegelten Zustand herbeigeführt werden. Weiterhin können der verriegelte und nicht verriegelte Zustand außen am Werkzeug 1 durch Rastierungen des Druckstücks 21 gegenüber dem Gehäuse 20 oder durch entsprechende Markierungen und dergleichen erfassbar gemacht werden.

### Bezugszeichenliste

- 1: Werkzeug
- 2: Kunststoffniet
- 3: Bauteil
- 4: Bauteil
- 5: Öffnung
- 6: Fußteil
- 7: Spreizflügel
- 8: Spreizstift
- 9: Kopfteil
- 10: Führung
- 11: Verspannvorrichtung
- 12: Scheibenfeder
- 13: Anlagefläche
- 14: Öffnung
- 15: Energiespeicher
- 16: Federring
- 17: Bolzen
- 18: Hülse
- 19: Stift
- 20: Gehäuse
- 21: Druckstück
- 22: Energiespeicher
- 23: Druckfeder
- 24: Anschlag
- 25: Nadel
- 26: Querschnittsfläche
- 27: Querschnittsfläche
- 28: Gehäuseteil
- 29: Längsachse
- 30: Freimachung
- 31: Öffnung
- 32: Anlagefläche

## Patentansprüche

1. Werkzeug (1) zur manuellen Montage von Kunststoffnieten (2) zur Verbindung von Bauteilen (3, 4) zumindest bestehend aus einem Gehäuse (20) mit einer stirnseitigen Anlagefläche (32) zur Anlage eines Kopfteils (9) des Kunststoffniets (2) und einer an dieser vorgesehenen Öffnung (31) zur verliersicheren Aufnahme eines Spreizstifts (8) des Kunststoffniets (2), wobei der Spreizstift (8) mittels einer axial im Gehäuse (20) entgegen der Wirkung eines Energiespeichers (22) verlagerbaren und an einem Anschlag (24) verriegelten Nadel (25) verlagerbar ist und zur axialen Verlagerung des Spreizstifts (8) gegenüber dem Kopfteil (9) die Verriegelung gelöst und die Nadel (25) axial verlagert wird und die Nadel (25) von einem der Anlagefläche (32) gegenüberliegenden Druckstück (21) axial beaufschlagbar ist, wobei das Druckstück (21) von einer Verrielungsposition in eine axial verlagerbare Montageposition um eine Längsachse (29) der Nadel (25) verdreht, wird, und wobei das Gehäuse (20) und das Druckstück (21) zueinander komplementäre Querschnittsflächen (26, 27) aufweisen.

2. Werkzeug (1) nach Anspruch 1, **dadurch gekennzeichnet, dass** die Querschnittsfläche (26) des Druckstücks (21) prismatisch ausgebildet ist.

3. Werkzeug (1) nach einem der Ansprüche 1 oder 2, **dadurch gekennzeichnet, dass** der Spreizstift (8) durch eine radial entgegen der Wirkung eines Energiespeichers (15) gegenüber dem Spreizstift (8) vorgespannte Anlagefläche (13) verliergesichert ist.

4. Werkzeug (1) nach Anspruch 3, **dadurch gekennzeichnet, dass** die Anlagefläche (13) durch eine Scheibenfeder (12) gebildet ist.

5. Werkzeug (1) nach Anspruch 3 oder 4, **dadurch gekennzeichnet, dass** die Anlagefläche (13) durch einen um das Gehäuse (20) gelegten Federring (16) radial beaufschlagt wird.

6. Werkzeug (1) nach Anspruch 5, **dadurch gekennzeichnet, dass** der Federring (16) verdrehgesichert ist.

## Claims

1. Tool (1) for manually mounting plastic rivets (2) for connecting components (3, 4) at least consisting of a housing (20) with an end-side bearing face (32) for bearing a head part (9) of the plastic rivet (2) and with an opening (31) which is provided on the said bearing face (32) for captively receiving an expanding pin (8) of the plastic rivet (2), it being possible for the expanding pin (8) to be displaced by means of a needle (25) which can be displaced in the housing (20) counter to the action of an energy store (22) and is locked at a stop (24), and the locking action being released for the axial displacement of the expanding pin (8) with respect to the head part (9), and the needle (25) being displaced axially, and it being possible for the needle (25) to be loaded axially by a pressure piece (21) which lies opposite the bearing face (32), the pressure piece (21) being rotated about a longitudinal axis (29) of the needle (25) from a locking position into an axially displaceable mounting position, and the housing (20) and the pressure piece (21) having cross-sectional faces (26, 27) which are complementary with respect to one another.

2. Tool (1) according to Claim 1, **characterized in that** the cross-sectional face (26) of the pressure piece (21) is of prismatic configuration.

3. Tool (1) according to either of Claims 1 and 2, **characterized in that** the expanding pin (8) is secured captively by a bearing face (13) which is prestressed radially with respect to the expanding pin (8) counter to the action of an energy store (15).

4. Tool (1) according to Claim 3, **characterized in that** the bearing face (13) is formed by a disc spring (12).

5. Tool (1) according to Claim 3 or 4, **characterized in that** the bearing face (13) is loaded radially by a spring ring (16) which is placed around the housing (20).

6. Tool (1) according to Claim 5, **characterized in that** the spring ring (16) is secured captively.

## Revendications

1. Outil (1) de montage manuel de rivets en matière plastique (2) afin de relier des éléments structuraux (3, 4), se composant au moins d'un boîtier (20) possédant une surface d'appui frontale (32) pour l'appui d'un élément de tête (9) du rivet en matière plastique (2) et d'une ouverture (31) prévue sur cette surface d'appui pour recevoir de manière imperdable une tige d'écartement (8) du rivet en matière plastique (2), la tige d'écartement (8) pouvant être déplacée au moyen d'une broche (25) qui peut être déplacée axialement dans le boîtier (20) à l'encontre de l'action d'un accumulateur d'énergie (22) et qui est verrouillée contre une butée (24), le verrouillage étant desserré et la broche (25) étant déplacée axialement pour déplacer axialement la tige d'écartement (8) par rapport à l'élément de tête (9), et la broche (25) pouvant être sollicitée axialement par une pièce de pression (21) opposée à la surface d'appui (32), la pièce de pression (21) étant tournée autour d'un axe longitudinal (29) de la broche (25) à partir d'une position de verrouillage jusqu'à une position de montage pouvant être déplacée axialement, et le boîtier (20) ainsi que la pièce de pression (21) présentant des surfaces en section transversale (26, 27) complémentaires l'une à l'autre.

2. Outil (1) selon la revendication 1, **caractérisé en ce que** la surface en section transversale (26) de la pièce de pression (21) est prismatique.

3. Outil (1) selon la revendication 1 ou 2, **caractérisé en ce que** la tige d'écartement (8) est imperdable grâce à une surface d'appui (13) précontrainte, par rapport à la tige d'écartement (8), radialement à l'encontre de l'action d'un accumulateur d'énergie (15).

4. Outil (1) selon la revendication 3, **caractérisé en ce que** la surface d'appui (13) est formée par une clavette disque (12).

5. Outil (1) selon la revendication 3 ou 4, **caractérisé en ce que** la surface d'appui (13) est sollicitée radialement par une rondelle élastique (16) placée autour du boîtier (20).

6. Outil (1) selon la revendication 5, **caractérisé en ce que** la rondelle élastique (16) est fixe en rotation.
